# FASCICULE DE BREVET EUROPEEN

(11) **EP 0 511 214 B1**
(45) Date de publication et mention de la délivrance du brevet: **02.11.1994**
(21) Numéro de dépôt: 90917351.0
(22) Date de dépôt: 15.11.1990
(51) Int. Cl.: F16B 13/06, F16L 55/00, F22B 37/00

(54) **ORGANE DE FIXATION**
BEFESTIGUNGSELEMENT
FIXING DEVICE

(43) Date de publication de la demande: 04.11.1992
(73) Titulaire: ACB, 75116 PARIS (FR)
(72) Inventeur: LE GOFF, Henri, F-44980 Sainte-Luce-sur-Loire (FR)
(74) Mandataire: Weinmiller, Jürgen, Dipl.-Ing.
(86) Numéro de dépôt international: FR9000819
(87) Numéro de publication internationale: WO9208900

(56) Documents cités:
- EP-A- 0 226 524
- DE-A- 2 256 822
- FR-A- 1 056 501
- FR-A- 2 647 163
- GB-A- 519 214
- US-A- 3 889 820

## Description

La présente invention concerne un organe de fixation destiné à être logé et fixé solidement dans un trou cylindrique d'une paroi quelconque et permettant de fixer, de suspendre, d'accrocher etc... à cet organe un objet quelconque.

Plus particulièrement, l'invention concerne un organe de fixation comprenant un tirant sur lequel est monté un tampon expansible entouré d'une bague fendue dont la longueur est inférieure à la longueur dudit tampon, ledit tampon expansible s'appuyant contre un embout lié à une extrémité du tirant, un écrou venant se visser sur l'extrémité opposée du tirant, pour comprimer le tampon expansible et assurer son expansion et celle de la bague fendue.

La figure 5 du brevet français n° 1 056 501 montre un dispositif d'ancrage de ce type dans lequel le tirant est constitué par un boulon 19 dont la tête 20 sert d'appui au tampon 4. Le tampon est entouré d'une douille fendue 5 à plusieurs fentes, les fentes ne se prolongeant évidemment pas sur toute la longueur de la douille. L'ensemble est introduit dans la cavité et la compression du tampon 4 est réalisée par une tige 16 taraudée qui sert d'écrou et est vissée sur l'extrémité de la tige du boulon. La douille 5 possède extérieurement des aspérités.

L'invention propose d'améliorer ce type d'organe de façon à lui permettre d'obtenir un ancrage résistant à un effort d'arrachement beaucoup plus important.

Ainsi l'invention a pour objet un organe de fixation tel que défini ci-dessus, caractérisé par le fait que la surface interne de la bague fendue possède une rainure hélicoïdale.

En effet, on a constaté que cette mesure était très importante pour permettre d'obtenir un effort d'arrachement très élevé, et beaucoup plus importante que d'avoir des aspérités sur la surface externe de la bague.

Selon une autre caractéristique, la bague possède une fente unique et sur toute sa longueur ce qui permet une expansion homogène de la bague sur toute sa longueur.

De préférence, cette fente est réalisée obliquement de façon à ce que l'absence d'effort ne soit pas localisé sur une génératrice.

D'autres caractéristiques de l'invention ressortiront de la description, faite ci-après d'un exemple de réalisation de l'invention, en se référant au dessin anexé dans lequel :

La figure 1 montre en coupe un organe de fixation selon l'invention.

La figure 2 montre une pièce de l'organe de fixation représentée figure 1.

La figure 3 est une vue en bout de la pièce représentée figure 2.

La figure 4 montre en vue agrandie le détail IV de la figure 2.

Dans l'exemple décrit, l'organe de fixation est utilisé pour permettre de suspendre à une plaque tubulaire 1, équipée de tubes 2, d'une boite à eau d'un appareil tel qu'un condenseur, un réchauffeur, un générateur de vapeur etc... une charge 3 qui peut être, par exemple une machine de maintenance.

L'organe de fixation est donc destiné à se fixer à l'intérieur du tube 2. Il comprend un tirant 4 sur lequel est enfilé un tampon expansible 5. Ce tampon 5 est pris en sandwich entre un embout 6 fixé par vissage à l'extrémité du tirant et une douille 7 enfilée sur l'autre extrémité du tirant. Une pièce d'appui 8 est interposée entre la douille 7 et le tampon expansible 5. Par ailleurs, pour éviter la rotation du tirant 4, il comporte un carré 9 sur lequel s'engage un alésage 10 de section carrée de la douille 7.

Un écrou 11 vient se visser sur l'extrémité du tirant sur laquelle est enfilée la douille et vient prendre appui contre la douille par l'intermédiaire d'une butée 12 à roulement. L'écrou 11 est muni d'une fente 13 pour permettre son vissage sur le tirant 4 à l'aide d'un tourne-vis dynamométrique calibré.

Le vissage de l'écrou 11 permet ainsi le rapprochement de l'embout 6 et de la douille 7 provoquant la compression axiale du tampon expansible 5 et donc son expansion radiale.

Une bague fendue 14 est disposée autour du tampon expansible 5. La longueur de cette bague 14 est, bien sûr, inférieure à la longueur du tampon expansible 5 de manière à permettre sa compression axiale. La surface interne de cette bague possède une rainure hélicoïdale 17. De cette façon, lors de la compression du tampon 5, sa surface externe pénètre dans cette rainure assurant une parfaite adhérence entre le tampon et la bague.

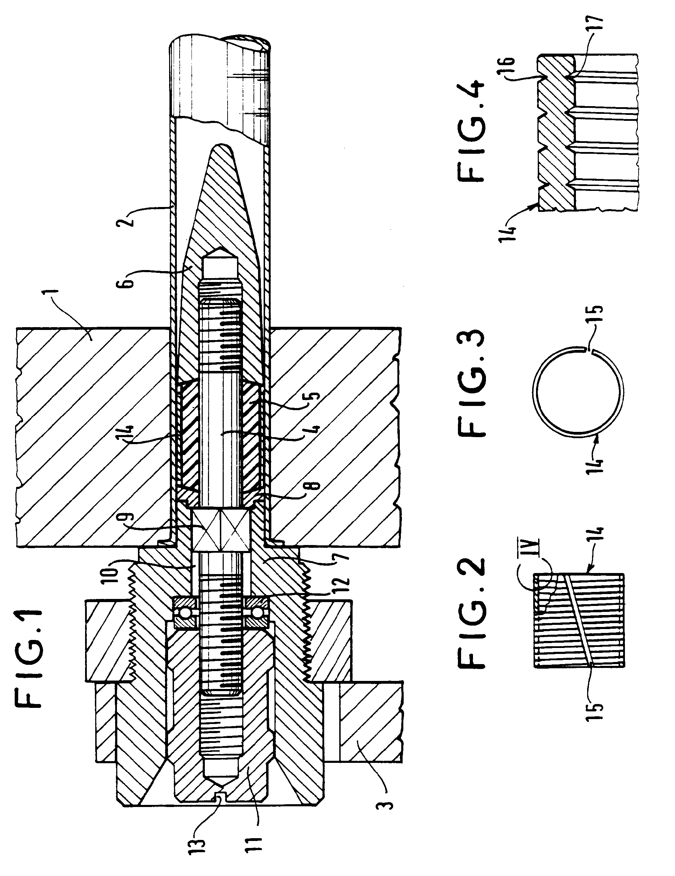

Les figures 2, 3 et 4 représentent en détail la bague 14. On voit que la fente 15 de la bague est oblique et non pas réalisée le long d'une génératrice. En outre, on voit que la surface externe de cette bague possède également une rainure 16, hélicoïdale dont le pas est par exemple de 1 mm. Comme pour la rainure 17 vis-à-vis du tampon 5, cette rainure 16 a pour but d'assurer, lors de l'expansion radiale du tampon expansible 5, un bon accrochage de la bague 14 dans le tube 2.

Grâce à cette bague 14, munie spécialement de la rainure interne 16, l'effort radial exercé sur le tube 2, ou d'une manière générale dans un trou cylindrique d'une paroi quelconque, est parfaitement réparti d'une manière homogène et permet d'obtenir un ancrage résistant à un effort d'arrachement très important.

L'obliquité de la fente 15 permet d'éviter que l'absence d'effort ne se localise sur une génératrice.

A titre d'exemple des essais ont montré que, dans le cas d'une application où l'organe de fixation est introduit dans un tube d'une plaque tubulaire, l'arrachement se produit pour des efforts de l'ordre de 400 kg (3924 N), ce résultat étant obtenu avec une faible pression sur la paroi interne du tube et un faible couple de serrage de l'écrou 11 de l'ordre de 400 gxm, (3,924 Nm).

Dans les cas où l'on doit installer l'organe et le fixer à distance, par exemple en cas de télémanipulation ou d'automatisation, l'effort de traction sur le tirant 4 peut être obtenu par l'adaptation de tous types d'actionneurs positifs à commande électrique, pneumatique hydraulique, électro-magnétique..., en remplacement de l'écrou 11.

## Revendications

1. Organe de fixation comprenant un tirant (4) sur lequel est monté un tampon expansible (5) entouré d'une bague fendue (14) dont la longueur est inférieure à la longueur dudit tampon (5), ledit tampon expansible s'appuyant contre un embout (6) lié à une extrémité du tirant, un écrou (11) venant se visser sur l'extrémité opposée du tirant, pour comprimer le tampon expansible (5) et assurer son expansion radiale et celle de la bague fendue (14), caractérisé en ce que la surface interne de la bague fendue (14) possède une rainure hélicoïdale (17).

2. Organe de fixation selon la revendication 1, caractérisé en ce que la fente (15) de la bague fendue (14) est unique et sur toute sa longueur.

3. Organe de fixation selon la revendication 2, caractérisé en ce que la fente (15) est réalisée obliquement.

4. Organe de fixation selon l'une des revendications 1, 2 ou 3, caractérisé en ce qu'une douille (7) est enfilée sur le tirant (4) entre ledit tampon expansible (5) et ledit écrou (11).

5. Organe de fixation selon la revendication 4, caractérisé en ce que le tirant (4) comporte un carré (9) sur lequel s'engage un alésage (10) de section carrée de ladite douille (7).

6. Organe de fixation selon l'une des revendications 4 ou 5, caractérisé en ce qu'une butée à roulement (12) est interposée entre ledit écrou (11) et ladite douille (7).

7. Organe de fixation selon l'une des revendications 4 à 6, caractérisé en ce qu'une pièce d'appui (8) est interposée entre ladite douille (7) et ledit tampon expansible (5).

## Patentansprüche

1. Befestigungsorgan mit einer Zugstange (4), auf die ein dehnbarer Puffer (5) aufgesetzt ist, der von einem geschlitzten Ring (14) umgeben ist, dessen Länge geringer als die Länge des Puffers (5) ist, wobei der dehnbare Puffer sich gegen ein mit einem Ende der Zugstange verbundenes Endstück (6) abstützt und eine Mutter (11) auf das entgegengesetzte Ende der Zugstange geschraubt wird, um den dehnbaren Puffer (5) zu komprimieren und seine Ausdehnung und die des geschlitzten Rings (14) zu bewirken, dadurch gekennzeichnet, daß die Innenoberfläche des geschlitzten Rings (17) eine spiralförmige Nut (17) besitzt.

2. Befestigungsorgan nach Anspruch 1, dadurch gekennzeichnet, daß der Ring (14) einen einzigen Schlitz (15) besitzt, der sich über seine ganze Länge erstreckt.

3. Befestigungsorgan nach Anspruch 2, dadurch gekennzeichnet, daß der Schlitz (15) schräg ausgeführt ist.

4. Befestigungsorgan nach einem der Ansprüche 1, 2 oder 3, dadurch gekennzeichnet, daß eine Buchse (7) auf die Zugstange (4) zwischen den dehnbaren Puffer (5) und die Mutter (11) aufgeschoben ist.

5. Befestigungsorgan nach Anspruch 4, dadurch gekennzeichnet, daß die Zugstange (4) einen Vierkant (9) aufweist, auf den eine Bohrung (10) viereckigen Querschnitts der Buchse (7) paßt.

6. Befestigungsorgan nach einem der Ansprüche 4 oder 5, dadurch gekennzeichnet, daß ein kugelgelagerter Anschlag (12) zwischen die Mutter (11) und die Buchse (7) eingefügt ist.

7. Befestigungsorgan nach einem der Ansprüche 4 bis 6, dadurch gekennzeichnet, daß ein Stützring (8) zwischen die Buchse (7) und den dehnbaren Puffer (5) eingefügt ist.

## Claims

1. A fixing member comprising a tie bar (4) having an expandable buffer (5) mounted thereon, the buffer being surrounded by a split ring (14) which is shorter than the length of said buffer (5), said expandable buffer bearing against an endpiece (6) linked to one end of the tie bar, and a nut (11) being screwed onto the opposite end of the tie bar to compress the expandable buffer (5) axially, thereby causing both the buffer and the split ring (14) to expand radially, the fixing member being characterized in that the inside surface of the split ring (14) has a helical groove (17).

2. A fixing member according to claim 1, characterized in that the split ring (14) has a single slot (15) extending over its entire length.

3. A fixing member according to claim 2, characterized in that the slot (15) extends obliquely.

4. A fixing member according to any one of claims 1, 2, or 3, characterized in that a sleeve (7) is threaded over the tie bar (4) between said expandable buffer (5) and said nut (11).

5. A fixing member according to claim 4, characterized in that the tie bar (4) includes a square (4) engaged in a square section bore (10) of said sleeve (7).

6. A fixing member according to claim 4 or 5, characterized in that a ball bearing abutment (12) is interposed between said nut (11) and said sleeve (7).

7. A fixing member according to any one of claims 4 to 6, characterized in that a thrust piece (8) is interposed between said sleeve (7) and said expandable buffer (5).
